# EUROPEAN PATENT APPLICATION

(11) **EP 4 783 128 A1**
(43) Date of publication of application: **29.07.2026**
(21) Application number: 24866886.5
(22) Date of filing: 17.05.2024
(51) Int. Cl.: G06V 20/60

(54) **COMMODITY STOCKOUT RATE ACQUISITION METHOD AND APPARATUS, AND STORAGE MEDIUM AND COMPUTER DEVICE**

(30) Priority: 18.09.2023 CN 202311199212
(71) Applicant: Shanghai Hanshi Information Technology Co., Ltd., Shanghai 200120 (CN)
(72) Inventor: JING, Yanhao, Shanghai 200120 (CN); HUANG, Sheng, Shanghai 200120 (CN); JIN, Xiaoping, Shanghai 200120 (CN); ZHUANG, Yitang, Shanghai 200120 (CN)
(74) Representative: IP TRUST SERVICES
(86) International application number: PCT/CN2024/093860
(87) International publication number: WO 2025/060463

(57) **Abstract**

Provided in the present disclosure are a commodity stockout rate acquisition method and apparatus, and a storage medium and a computer device. The method comprises: acquiring images of commodity areas at different times, so as to obtain a plurality of area images; performing commodity identification on the plurality of area images, and generating a plurality of corresponding arrangement drawings on the basis of commodity identification results, wherein each arrangement drawing is used for indicating the commodity positions of various commodities in the area images; superposing each plurality of arrangement drawings, so as to obtain a historical arrangement drawing for representing the full stock of various commodities; on the basis of the capturing time sequence of the area images, determining, as a target arrangement drawing, the arrangement drawing corresponding to the last captured area image; and acquiring the stockout rates of various commodities in the commodity areas on the basis of the target arrangement drawing and the historical arrangement drawing.

## Description

### RELATED APPLICATIONS

The present disclosure claims the priority of Chinese invention patent application with an application No. 202311199212.2 filed on September 18, 2023, the entire content of which is incorporated herein by reference.

### TECHNICAL FIELD

The present disclosure relates to the technical field of commodity statistics, and particularly to a commodity stockout rate acquisition method, and apparatus, a storage medium, and a computer device.

### BACKGROUND

If commodities on shelves are out of stock, the shopping experience of purchasers will be affected and the sales volume of the commodities out of stock will be restricted. Therefore, merchants and stores will closely monitor the stockout rate of each type of commodities on the shelves. However, the existing related arts all adopt a manual inspection method to obtain the commodity stockout rate, which is inefficient and causes a huge waste of human resources.

### SUMMARY

The present disclosure aims to overcome the disadvantages and deficiencies in the related arts, and provide a commodity stockout rate acquisition method and apparatus, a storage medium, and a computer device, which can improve the efficiency of obtaining a commodity stockout rate and save human resources.

A first aspect of the embodiments of the present disclosure provides a commodity stockout rate acquisition method, including the steps of:
acquiring images of commodity areas at different times to obtain a plurality of area images;
performing commodity identification on the plurality of area images, and generating a plurality of corresponding arrangement drawings according to commodity identification results, wherein each arrangement drawing is used for indicating the commodity positions of various commodities in the area images;
superimposing the plurality of arrangement drawings to obtain a historical arrangement drawing which represents the full stock of each type of commodities;
determining, as a target arrangement drawing, the arrangement drawing corresponding to a last captured area image, according to a capturing time sequence of the area images; and
obtaining a stockout rate of each type of commodities in the commodity areas according to the target arrangement drawing and the historical arrangement drawing.

Further, the step of obtaining a stockout rate of each type of commodities in the commodity areas according to the target arrangement drawing and the historical arrangement drawing includes:
obtaining a first commodity quantity of each type of commodities in the target arrangement drawing and a second commodity quantity of each type of commodities in the historical arrangement drawing;
obtaining an inventory rate of each type of commodities in the commodity areas according to the first commodity quantity and the second commodity quantity; and
obtaining the stockout rate of the corresponding commodities according to the inventory rate of each type of commodities in the commodity areas.

Further, the step of obtaining a first commodity quantity of each type of commodities in the target arrangement drawing and a second commodity quantity of each type of commodities in the historical arrangement drawing includes:
obtaining the first commodity quantity according to a first mask range of each type of commodities in the target arrangement drawing and an individual mask range of each type of commodities; wherein the first mask range indicates a total occupied range of the corresponding type of commodities in the target arrangement drawing, and the individual mask range indicates an individual occupied range of the corresponding type of commodities in the arrangement drawing; and
obtaining the second commodity quantity according to the second mask range of each type of commodities in the historical arrangement drawing and the individual mask range of each type of commodities; wherein the second mask range indicates a total occupied range of the corresponding type of commodities in the historical arrangement drawing.

Further, the step of obtaining a stockout rate of each type of commodities in the commodity areas according to the target arrangement drawing and the historical arrangement drawing includes:
obtaining a first mask range of each type of commodities in the target arrangement drawing and a second mask range of each type of commodities in the historical arrangement drawing; wherein the first mask range indicates a total occupied range of the corresponding type of commodities in the target arrangement drawing, and the second mask range indicates a total occupied range of the corresponding type of commodities in the historical arrangement drawing;
obtaining an inventory rate of each type of commodities in the commodity areas according to the first mask range and the second mask range; and
obtaining the stockout rate of the corresponding commodities according to the inventory rate of each type of commodities in the commodity areas.

Further, the step of performing commodity identification on the plurality of area images, and generating a plurality of corresponding arrangement drawings according to commodity identification results includes:
performing commodity identification on the plurality of area images to obtain commodity information and commodity positions of each type of commodities in each of the area images;
generating a commodity mask of each type of commodities in each of the area images according to the commodity information and the commodity positions; and
obtaining the arrangement drawing of the corresponding area image according to the commodity mask of each type of commodities in the same area image.

Further, the step of superimposing the plurality of arrangement drawings to obtain a historical arrangement drawing includes:
superimposing the commodity mask of each type of commodities in the plurality of arrangement drawings to obtain a superimposed mask of each type of commodities, wherein the superimposed mask represents a mask range when each type of commodities is fully stocked; and
obtaining the historical arrangement drawing according to the superimposed mask of each type of commodities.

Further, after the step of acquiring images of commodity areas at different times to obtain a plurality of area images, the method further includes:
performing pedestrian screening, commodity information screening, and/or commodity quantity screening on the plurality of area images to screen out an abnormal area image; and
deleting the abnormal area image from the plurality of area images.

Further, the step of pedestrian screening includes: inputting the plurality of area images into a trained pedestrian detection model, and determining an image where a pedestrian is detected output by the pedestrian detection model, as the abnormal area image.

Further, the step of commodity information screening includes:
performing commodity identification on the plurality of area images to obtain commodity information of each of the area images; and
determining the commodity information with an occurrence frequency lower than a preset threshold as abnormal commodity information, and identifying the area image corresponding to the abnormal commodity information as the abnormal area image.

Further, the step of commodity quantity screening includes:
performing commodity identification on the plurality of area images to obtain a commodity quantity of each type of commodities in each of the area images;
obtaining an area image with a sudden drop in the commodity quantity according to the capturing time sequence of the area images and the commodity quantity of each type of commodities in each of the area images; and
determining the area image with a sudden drop in the commodity quantity as the abnormal area image.

A second aspect of the embodiments of the present disclosure provides an apparatus for obtaining a commodity stockout rate, including:
an area image obtaining module configured to acquire images of commodity areas at different times to obtain a plurality of area images;
an arrangement drawing obtaining module configured to perform commodity identification on the plurality of area images, and generate a plurality of corresponding arrangement drawings according to commodity identification results, wherein each arrangement drawing is used for indicating the commodity positions of various commodities in the area images;
a historical arrangement drawing obtaining module configured to superimpose the plurality of arrangement drawings to obtain a historical arrangement drawing which represents the full stock of each type of commodities;
a target arrangement drawing obtaining module configured to determine the arrangement drawing corresponding to a last captured area image as a target arrangement drawing according to the capturing time sequence of the area images; and
a stockout rate obtaining module configured to obtain a stockout rate of each type of commodities in the commodity areas according to the target arrangement drawing and the historical arrangement drawing.

A third aspect of the embodiments of the present disclosure provides a computer-readable storage medium, which stores a computer program that, when executed by a processor, implements the steps of the commodity stockout rate acquisition method described above.

A fourth aspect of the embodiments of the present disclosure provides a computer device, comprising a memory, a processor, and a computer program stored in the memory and executable by the processor, wherein when executing the computer program, the processor implements the steps of the commodity stockout rate acquisition method described above.

In some embodiments of the present disclosure, the historical arrangement drawing which represents the full stock of each type of commodities is obtained according to the plurality of area images of the commodity areas at different times, and a stockout rate of each type of commodities in the commodity areas is obtained according to the target arrangement drawing corresponding to the last captured area image, thereby efficiently and accurately obtaining the stockout rate of the commodities and saving human resources.

In order to enable a clearer understanding of the present disclosure, specific embodiments of the present disclosure will be described below with reference to the drawings.

### BRIEF DESCRIPTION OF THE DRAWINGS

FIG. 1 illustrates a flowchart of a commodity stockout rate acquisition method according to an embodiment of the present disclosure.
FIG. 2 illustrates a schematic diagram of an arrangement drawing of a commodity stockout rate acquisition method according to an embodiment of the present disclosure.
FIG. 3 illustrates a schematic diagram of a historical arrangement drawing of a commodity stockout rate acquisition method according to an embodiment of the present disclosure.
FIG. 4 illustrates a schematic diagram of a screening process of a commodity stockout rate acquisition method according to an embodiment of the present disclosure.
FIG. 5 illustrates a module connection diagram of an apparatus for obtaining a commodity stockout rate according to an embodiment of the present disclosure.

### DETAILED DESCRIPTION OF EMBODIMENTS

In order to clarify the objectives, technical solutions and advantages of the present disclosure, the embodiments of the present disclosure are described in further detail below with reference to the drawings.

It shall be explicitly stated that those described are merely a part, rather than all, of the embodiments of the present disclosure. Based on the embodiments of the present disclosure, any other embodiment obtained by persons of ordinary skill in the art without making creative efforts shall fall within the protection scope of the present disclosure.

In the following description, when reference is made to the drawings, the same reference numerals in different drawings denote the same or similar elements unless otherwise indicated. In the description of the present disclosure, it shall be understood that the terms "first", "second", "third" and the like are used merely to distinguish similar objects, and are not necessarily used to describe a specific order or sequence, nor should they be construed as indicating or implying relative importance. For persons of ordinary skill in the art, the specific meanings of the above terms in the present disclosure may be understood according to specific circumstances. The singular forms "a", "said" and "the" used in the present disclosure and the appended claims are also intended to include the plural forms unless the context clearly dictates otherwise. The word "if" as used herein may be interpreted as "when...", "upon..." or "in response to determining that...".

In addition, in the description of the present disclosure, unless otherwise specified, "a plurality of" means two or more. The term "and/or" describes the association relationship between associated objects and indicates that there may be three relationships. For example, A and/or B may indicate three cases: A exists alone, both A and B exist, and B exists alone. The character "/" generally indicates that the associated objects are in an "or" relationship.

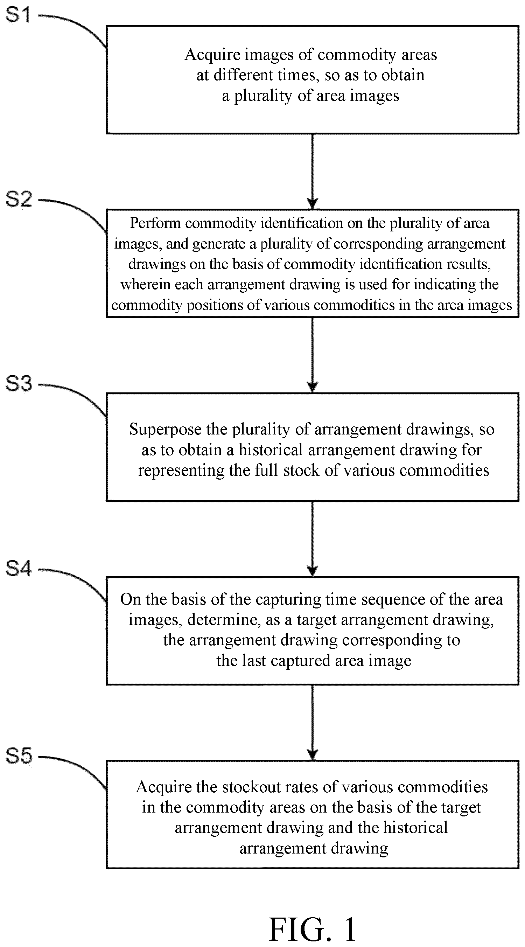

Please refer to FIG. 1, which illustrates a flowchart of a commodity stockout rate acquisition method according to an embodiment of the present disclosure, including the following steps.

S1: acquiring images of commodity areas at different times to obtain a plurality of area images.

In which, the area image refers to an image of each commodity area on a shelf, where the commodity areas may be divided according to the commodity placement positions on the shelf. For example, each row on the shelf represents one commodity area. The area images may be obtained in the following steps.

An image collection device is used to capture RGB images of the shelf. For a fixed image collection device such as a camera or an AI camera, it is necessary to ensure that the position and the capture angle of the image collection device remain unchanged. For a non-fixed image collection device such as a wheeled robot or an unmanned aerial vehicle, in case of the same shelf, it is necessary to make adjustment to capture at a fixed position and from a fixed viewing angle: for the wheeled robot, according to an operation route map stored in a robot system, the robot is made to capture the shelf at a specific position and from a specific angle on the route map; and for the unmanned aerial vehicle, according to a flight route map stored in an UAV system and a positioning device such as an electronic compass, the shelf is captured at a specific plane position, a specific height from the ground and from a specific angle.

For the obtained RGB images, a target detection model of an algorithm processing module in a computing system is used to detect all commodities and obtain detection boxes; and according to the coordinates, widths and heights of the detection boxes, an image processing method is adopted to crop out the images of the commodity areas to obtain the area images. In which, the target detection model is trained by means of deep learning, i.e., labeling the commodities using the collected scene image data, then training and verifying a deep network model based on the idea of maximum likelihood. The deep network model includes, but is not limited to, a deep convolutional network model or a vision Transformer (ViT) model.

S2: performing commodity identification on the plurality of area images, and generating a plurality of corresponding arrangement drawings according to commodity identification results, wherein each arrangement drawing is used for indicating the commodity positions of various commodities in the area images.

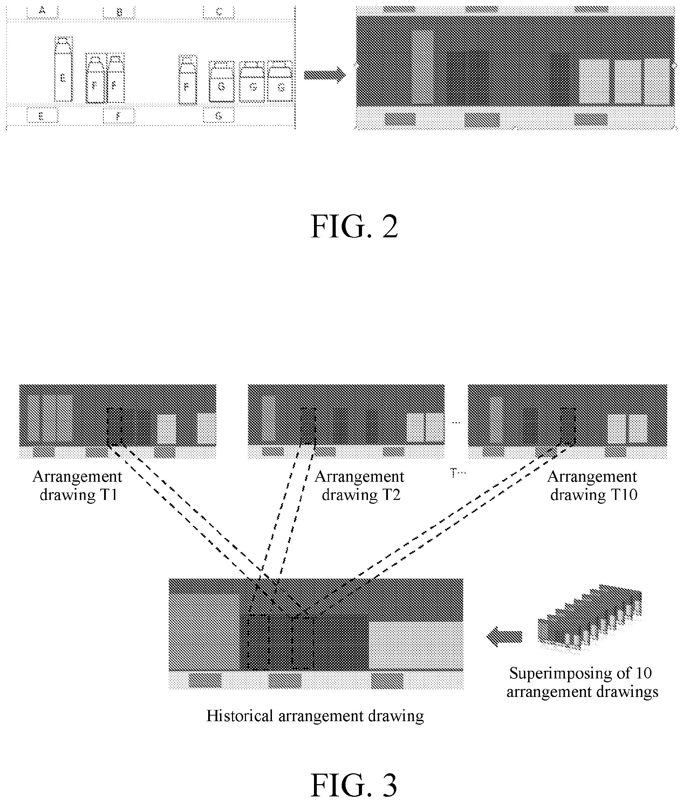

In which, the commodity identification may be implemented by inputting the area images into a trained feature extraction model for feature extraction, retrieving the extracted features in a preset commodity feature library in an algorithm processing module, and calculating a similarity between the extracted features and the features in the commodity feature library. For example, the similarity may be calculated by computing a Euclidean distance between the features, and a result corresponding to a minimum Euclidean distance is taken as the commodity identification result with a highest confidence, so as to obtain the positions and the sizes of all commodity bounding boxes as well as the commodity identification results. The arrangement drawings generated in step S2 are illustrated in FIG. 2.

S3: superimposing the plurality of arrangement drawings to obtain a historical arrangement drawing.

The historical arrangement drawing obtained in step S3 is illustrated in FIG. 3. In an example, the historical arrangement drawing is formed by superimposing, fusing and adjusting the previous 10 batches of arrangement drawings through an algorithm. It shall be understood that the historical arrangement drawing may also be formed by superimposing, fusing and adjusting other quantities of batches of arrangement drawings through an algorithm, so as to adaptively meet the requirement for identifying the commodity stockout rate.

S4: determining, as a target arrangement drawing, the arrangement drawing corresponding to a last captured area image, according to a capturing time sequence of the area images.

S5: obtaining a stockout rate of each type of commodities in the commodity areas according to the target arrangement drawing and the historical arrangement drawing.

In a feasible embodiment, step S2 of performing commodity identification on the plurality of area images, and generating a plurality of corresponding arrangement drawings according to commodity identification results includes the following steps.

S21: performing commodity identification on the plurality of area images to obtain commodity information and commodity positions of each type of commodities in each of the area images.

S22: generating a commodity mask of each type of commodities in each of the area images according to the commodity information and the commodity positions.

In which, step S22 may judge whether the adjacent commodities are of a same type according to the commodity information and the commodity positions; if yes, the adjacent commodities are correlated to form a group of such commodities, and then a commodity mask corresponding to the type of the commodities is constructed according to the commodity positions of the outermost commodities in the group of such commodities. In some embodiments, it may be judged whether the adjacent commodities are of the same type by judging whether the commodity information of the adjacent commodities is consistent, and whether a distance between the commodity positions falls within a preset threshold range.

Alternatively, step S22 may generate an individual commodity mask for each type of commodities according to the commodity information and the commodity position, and construct a commodity mask corresponding to the type of the commodities according to the individual commodity mask with the same commodity information.

S23: obtaining the arrangement drawing of the corresponding area image according to the commodity mask of each type of commodities in the same area image.

In a feasible embodiment, step S3 of superimposing the plurality of arrangement drawings to obtain a historical arrangement drawing includes the following steps.

S31: superimposing the commodity mask of each type of commodities in the plurality of arrangement drawings to obtain a superimposed mask of each type of commodities, wherein the superimposed mask represents a mask range when each type of commodities is fully stocked.

It can be understood that the superimposed mask is the union of the commodity mask of each type of commodities in the plurality of arrangement drawings.

S32: obtaining the historical arrangement drawing according to the superimposed mask of each type of commodities.

In a feasible embodiment, after step S1 of acquiring images of commodity areas at different times to obtain a plurality of area image, the method further includes the following steps.

S11: performing pedestrian screening, commodity information screening, and/or commodity quantity screening on the plurality of area images to screen out an abnormal area image.

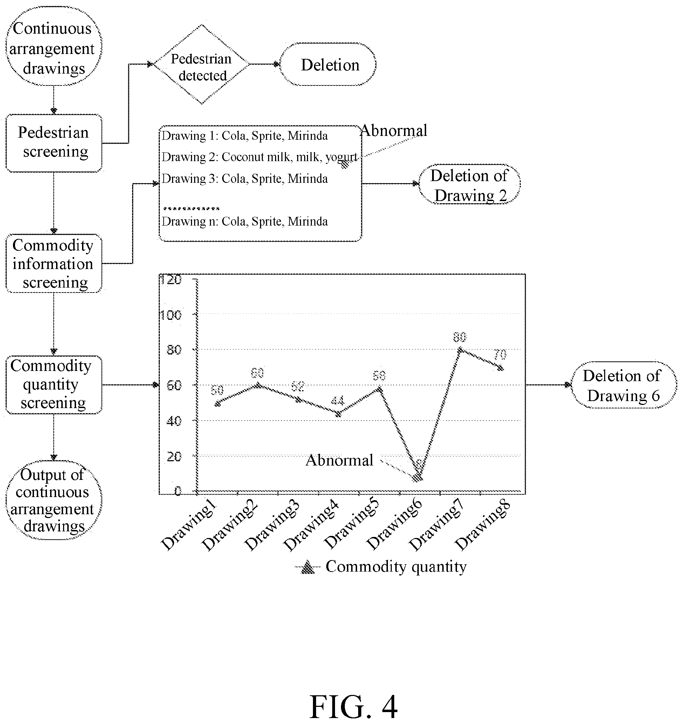

In which, the screening performed in step S11 may be one or more of the above screenings. For example, as illustrated in FIG. 4, pedestrian screening, commodity information screening, and/or commodity quantity screening are performed in sequence.

S12: deleting the abnormal area image from the plurality of area images.

In a feasible embodiment, the step of pedestrian screening includes: inputting the plurality of area images into a trained pedestrian detection model, and determining an image where a pedestrian is detected output by the pedestrian detection model, as the abnormal area image.

In a feasible embodiment, the step of commodity information screening includes:
performing commodity identification on the plurality of area images to obtain commodity information of each of the area images; and
determining the commodity information with an occurrence frequency lower than a preset threshold as abnormal commodity information, and identifying an area image corresponding to the abnormal commodity information as the abnormal area image.

In a feasible embodiment, the step of commodity quantity screening includes:
performing commodity identification on the plurality of area images to obtain a commodity quantity of each type of commodities in each of the area images;
obtaining an area image with a sudden drop in the commodity quantity according to the capturing time sequence of the area images and the commodity quantity of each type of commodities in each of the area images; and
determining the area image with a sudden drop in the commodity quantity as the abnormal area image.

In which, a sudden drop in the commodity quantity refers to a situation where a difference between a reduction ratio of the commodity quantity and an average reduction ratio exceeds a preset difference threshold.

It shall be understood that the screening sequence exemplified in FIG. 4 is merely an illustrative example. Pedestrian screening, commodity information screening, and commodity quantity screening may also be performed in any other sequence, which is not limited herein.

In some other embodiments, the abnormal area image may also be screened based on other information. For example, by obtaining shelf display status data, the commodity areas images within the period of temporary shelf adjustment are screened, and an image where commodity display information changes significantly due to the temporary shelf adjustment is identified as the abnormal area image.

In a feasible embodiment, step S5 of obtaining a stockout rate of each type of commodities in the commodity areas according to the target arrangement drawing and the historical arrangement drawing includes the following steps.

S501: obtaining a first commodity quantity of each type of commodities in the target arrangement drawing and a second commodity quantity of each type of commodities in the historical arrangement drawing.

S502: obtaining an inventory rate of each type of commodities in the commodity areas according to the first commodity quantity and the second commodity quantity.

In which, the inventory rate of each type of commodities in the commodity areas is a result of dividing the corresponding first commodity quantity by the second commodity quantity. The inventory rate is a percentage value that does not exceed 100%.

S503: obtaining the stockout rate of the corresponding commodities according to the inventory rate of each type of commodities in the commodity areas.

In which, the stockout rate is a result of subtracting the inventory rate from 100%.

In a feasible embodiment, step S502 of obtaining an inventory rate of each type of commodities in the commodity areas according to the first commodity quantity and the second commodity quantity includes the following steps.

S5021: obtaining the first commodity quantity according to a first mask range of each type of commodities in the target arrangement drawing and an individual mask range of each type of commodities; wherein the first mask range indicates a total occupied range of the corresponding type of commodities in the target arrangement drawing, and the individual mask range indicates an individual occupied range of the corresponding type of commodities in the arrangement drawing.

In which, the first commodity quantity is a result of dividing the first mask range of the corresponding commodities by the individual mask range.

S5022: obtaining the second commodity quantity according to the second mask range of each type of commodities in the historical arrangement drawing and the individual mask range of each type of commodities; wherein the second mask range indicates a total occupied range of the corresponding type of commodities in the historical arrangement drawing.

In which, the second commodity quantity is a result of dividing the second mask range of the corresponding commodities by the individual mask range.

In a feasible embodiment, step S5 of obtaining a stockout rate of each type of commodities in the commodity areas according to the target arrangement drawing and the historical arrangement drawing includes the following steps.

S511: obtaining a first mask range of each type of commodities in the target arrangement drawing and a second mask range of each type of commodities in the historical arrangement drawing; wherein the first mask range indicates a total occupied range of the corresponding type of commodities in the target arrangement drawing, and the second mask range indicates a total occupied range of the corresponding type of commodities in the historical arrangement drawing.

S512: obtaining an inventory rate of each type of commodities in the commodity areas according to the first mask range and the second mask range.

The inventory rate is a result of dividing the corresponding first mask range by the second mask range. The inventory rate is a percentage value that does not exceed 100%.

S513: obtaining the stockout rate of the corresponding commodities according to the inventory rate of each type of commodities in the commodity areas.

In which, the stockout rate is a result of subtracting the inventory rate from 100%.

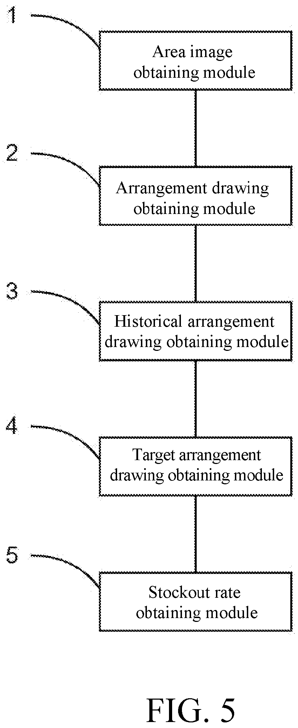

Please refer to FIG. 5, an embodiment of the present disclosure further provides an apparatus for obtaining a commodity stockout rate, including:
an area image obtaining module 1 configured to acquire images of commodity areas at different times to obtain a plurality of area images;
an arrangement drawing obtaining module 2 configured to perform commodity identification on the plurality of area images, and generate a plurality of corresponding arrangement drawings according to commodity identification results, wherein each arrangement drawing is used for indicating the commodity positions of various commodities in the area images;
a historical arrangement drawing obtaining module 3 configured to superimpose the plurality of arrangement drawings to obtain a historical arrangement drawing which represents the full stock of each type of commodities;
a target arrangement drawing obtaining module 4 configured to determine the arrangement drawing corresponding to a last captured area image as a target arrangement drawing according to the capturing time sequence of the area images; and
a stockout rate obtaining module 5 configured to obtain a stockout rate of each type of commodities in the commodity areas according to the target arrangement drawing and the historical arrangement drawing.

It shall be noted that when the apparatus for obtaining the commodity stockout rate according to the embodiments of the present disclosure performs the commodity stockout rate acquisition method, the division of the above functional modules is merely an example for illustration. In practical applications, the functions may be allocated to be completed by different functional modules as required, that is, the internal structure of the apparatus may be divided into different functional modules to implement all or part of the functions described above. In addition, the apparatus for obtaining the commodity stockout rate according to other embodiments of the present disclosure is conceived in the same way as the commodity stockout rate acquisition method according to the embodiments of the present disclosure. For the details of the implementation process, please refer to the method embodiments, which will not be repeated here.

The embodiments of the present disclosure further provide a computer-readable storage medium, which stores a computer program that, when executed by a processor, implements the steps of the commodity stockout rate acquisition method.

The embodiments of the present disclosure further provide a computer device, including a memory, a processor, and a computer program stored in the memory and executable by the processor, wherein when executing the computer program, the processor implements the steps of the commodity stockout rate acquisition method.

Those skilled in the art shall appreciate that any embodiment of the present disclosure can be provided as a method, a system or a computer program product. Therefore, the present disclosure can take the form of a full hardware embodiment, a full software embodiment, or an embodiment combining software and hardware. Moreover, the present invention can take the form of a computer program product implemented on one or more computer usable storage mediums (including, but not limited to, a magnetic disc memory, CD-ROM, optical storage, etc.) containing therein computer usable program codes.

The present disclosure is described with reference to a flowchart and/or a block diagram of the method, apparatus (system) and computer program product according to the embodiments of the present disclosure. It shall be appreciated that each flow and/or block in the flowchart and/or the block diagram and a combination of flows and/or blocks in the flowchart and/or the block diagram can be realized by computer program instructions. Those computer program instructions can be provided to a general computer, a dedicated computer, an embedded processor or a processor of other programmable data processing device to produce a machine, so that the instructions executed by the processor of the computer or other programmable data processing device produce means for realizing specified functions in one or more flows in the flowchart and/or one or more blocks in the block diagram.

These computer program instructions may also be stored in a computer readable memory capable of guiding the computer or other programmable data processing devices to work in a particular manner, so that the instructions stored in the computer readable memory can produce manufacture articles including an instructing device which realizes function(s) specified in one or more flows in the flowchart and/or one or more blocks in the block diagram.

These computer program instructions may also be loaded onto the computer or other programmable data processing devices, so that a series of operation steps are performed on the computer or other programmable data processing devices to produce a processing realized by the computer, thus the instructions executed on the computer or other programmable devices provide step(s) for realizing function(s) specified in one or more flows in the flowchart and/or one or more blocks in the block diagram.

In a typical configuration, the computing device comprises one or more processors (CPUs), an input/output interface, a network interface and a memory.

The memory may have the form of a volatile memory, a Random-Access Memory (RAM) and/or a nonvolatile memory such as Read-Only Memory (ROM) or a flash RAM, etc. among the computer readable medium. The memory is an example of the computer readable medium.

The computer-readable medium includes permanent and non-permanent, removable and non-removable media, which can realize the information storage in any method or technique. The information can be computer readable instructions, data structures, program modules or other data. An example of the computer storage medium includes, but not limited to, a Phase-Change Random-access Memory (PRAM), a static random access memory (SRAM), a dynamic random access memory (DRAM), other types of random access memory (RAM), a read-only memory (ROM), an electrically-erasable programmable read-only memory (EEPROM), a flash memory or other memory techniques, a compact disk read only memory (CD-ROM), a digital versatile disc (DVD) or other optical storages, magnetic cassette tapes, magnetic diskettes or other magnetic storage device or any other non-transmission medium, which can be used for the storage of information accessible to a computing device. According to the definitions herein, the computer readable medium does not include any temporary computer readable media (transitory media), such as modulated data signal and carrier wave.

Further to be noted, the term "comprise", "include" or any other variant intends to cover the non-exclusive inclusions, so that a process, a method, a commodity or a device including a series of elements include not only those elements, but also other elements not explicitly listed, or further include inherent elements of such process, method, commodity or device. In a case where there is no further limitation, the elements defined by a sentence "comprising a ..." do not exclude other identical elements existing in the process, method, commodity or device including the elements.

Those described above are just preferred embodiments of the present disclosure, rather than limiting the present disclosure. For those skilled in the art, the present disclosure is intended to cover various amendments or variations. Any amendment, equivalent substitution, improvement, etc. made under the spirit and the principle of the present disclosure shall fall within the scope of the claims of the present disclosure.

## Claims

1. A commodity stockout rate acquisition method, **characterized in that** comprising:
acquiring images of commodity areas at different times, to obtain a plurality of area images;
performing commodity identification on the plurality of area images, and generating a plurality of corresponding arrangement drawings according to commodity identification results; wherein each arrangement drawing is used for indicating the commodity positions of various commodities in the area images;
superimposing the plurality of arrangement drawings to obtain a historical arrangement drawing for representing the full stock of each type of commodities;
determining, as a target arrangement drawing, the arrangement drawing corresponding to a last captured area image, according to a capturing time sequence of the area images; and
obtaining a stockout rate of each type of commodities in the commodity areas according to the target arrangement drawing and the historical arrangement drawing.

2. The commodity stockout rate acquisition method according to claim 1, **characterized in that** the step of obtaining a stockout rate of each type of commodities in the commodity areas according to the target arrangement drawing and the historical arrangement drawing comprises:
obtaining a first commodity quantity of each type of commodities in the target arrangement drawing and a second commodity quantity of each type of commodities in the historical arrangement drawing;
obtaining an inventory rate of each type of commodities in the commodity areas according to the first commodity quantity and the second commodity quantity; and
obtaining the stockout rate of the corresponding commodities according to the inventory rate of each type of commodities in the commodity areas.

3. The commodity stockout rate acquisition method according to claim 2, **characterized in that** the step of obtaining a first commodity quantity of each type of commodities in the target arrangement drawing and a second commodity quantity of each type of commodities in the historical arrangement drawing comprises:
obtaining the first commodity quantity according to a first mask range of each type of commodities in the target arrangement drawing and an individual mask range of each type of commodities; wherein the first mask range indicates a total occupied range of the corresponding type of commodities in the target arrangement drawing, and the individual mask range indicates an individual occupied range of the corresponding type of commodities in the arrangement drawing; and
obtaining the second commodity quantity according to the second mask range of each type of commodities in the historical arrangement drawing and the individual mask range of each type of commodities; wherein the second mask range indicates a total occupied range of the corresponding type of commodities in the historical arrangement drawing.

4. The commodity stockout rate acquisition method according to claim 1, **characterized in that** the step of obtaining a stockout rate of each type of commodities in the commodity areas according to the target arrangement drawing and the historical arrangement drawing comprises:
obtaining a first mask range of each type of commodities in the target arrangement drawing and a second mask range of each type of commodities in the historical arrangement drawing; wherein the first mask range indicates a total occupied range of the corresponding type of commodities in the target arrangement drawing, and the second mask range indicates a total occupied range of the corresponding type of commodities in the historical arrangement drawing;
obtaining an inventory rate of each type of commodities in the commodity areas according to the first mask range and the second mask range; and
obtaining the stockout rate of the corresponding commodities according to the inventory rate of each type of commodities in the commodity areas.

5. The commodity stockout rate acquisition method according to claim 1, **characterized in that** the step of performing commodity identification on the plurality of area images, and generating a plurality of corresponding arrangement drawings according to commodity identification results comprises:
performing commodity identification on the plurality of area images to obtain commodity information and commodity positions of each type of commodities in each of the area images;
generating a commodity mask of each type of commodities in each of the area images according to the commodity information and the commodity positions; and
obtaining the arrangement drawing of the corresponding area image according to the commodity mask of each type of commodities in the same area image.

6. The commodity stockout rate acquisition method according to claim 5, **characterized in that** the step of superimposing the plurality of arrangement drawings to obtain a historical arrangement drawing comprises:
superimposing the commodity mask of each type of commodities in the plurality of arrangement drawings to obtain a superimposed mask of each type of commodities, wherein the superimposed mask represents a mask range when each type of commodities is fully stocked; and
obtaining the historical arrangement drawing according to the superimposed mask of each type of commodities.

7. The commodity stockout rate acquisition method according to claim 1, **characterized in that** after the step of acquiring images of commodity areas at different times to obtain a plurality of area images, the method further comprises:
performing pedestrian screening, commodity information screening, and/or commodity quantity screening on the plurality of area images to screen out an abnormal area image; and
deleting the abnormal area image from the plurality of area images.

8. The commodity stockout rate acquisition method according to claim 7, **characterized in that** the step of pedestrian screening comprises: inputting the plurality of area images into a trained pedestrian detection model, and determining an image where a pedestrian is detected output by the pedestrian detection model, as the abnormal area image.

9. The commodity stockout rate acquisition method according to claim 7, **characterized in that** the step of commodity information screening comprises:
performing commodity identification on the plurality of area images to obtain commodity information of each of the area images; and
determining the commodity information with an occurrence frequency lower than a preset threshold as abnormal commodity information, and identifying the area image corresponding to the abnormal commodity information as the abnormal area image.

10. The commodity stockout rate acquisition method according to claim 7, **characterized in that** the step of commodity quantity screening comprises:
performing commodity identification on the plurality of area images to obtain a commodity quantity of each type of commodities in each of the area images;
obtaining an area image with a sudden drop in the commodity quantity according to the capturing time sequence of the area images and the commodity quantity of each type of commodities in each of the area images; and
determining the area image with a sudden drop in the commodity quantity as the abnormal area image.

11. An apparatus for obtaining commodity stockout rate, **characterized in that** comprising:
an area image obtaining module configured to acquire images of commodity areas at different times to obtain a plurality of area images;
an arrangement drawing obtaining module configured to perform commodity identification on the plurality of area images, and generate a plurality of corresponding arrangement drawings according to commodity identification results, wherein each arrangement drawing is used for indicating the commodity positions of various commodities in the area images;
a historical arrangement drawing obtaining module configured to superimpose the plurality of arrangement drawings to obtain a historical arrangement drawing which represents the full stock of each type of commodities;
a target arrangement drawing obtaining module configured to determine the arrangement drawing corresponding to a last captured area image as a target arrangement drawing according to the capturing time sequence of the area images; and
a stockout rate obtaining module configured to obtain a stockout rate of each type of commodities in the commodity areas according to the target arrangement drawing and the historical arrangement drawing.

12. A computer-readable storage medium, **characterized in that** the computer-readable storage medium stores a computer program that, when executed by a processor, implements the steps of the commodity stockout rate acquisition method according to any one of claims 1 to 10.

13. A computer device, comprising a memory, a processor, and a computer program stored in the memory and executable by the processor, wherein when executing the computer program, the processor implements the steps of the commodity stockout rate acquisition method according to any one of claims 1 to 10.
